# DEMANDE DE BREVET EUROPEEN

(11) **EP 2 810 553 A1**
(43) Date de publication de la demande: **10.12.2014**
(21) Numéro de dépôt: 14305838.6
(22) Date de dépôt: 03.06.2014
(51) Int. Cl.: A01K 1/015

(54) **Dispositif modulaire de revêtement de sol pour box et plus particulièrement pour box à chevaux**

(30) Priorité: 03.06.2013 FR 1355033
(71) Demandeur: Faulocam, 47120 Saint-Sernin (FR)
(72) Inventeur: Fautras, Jean-Luc, 47120 SAINT SERNIN (FR)
(74) Mandataire: Fantin, Laurent

(57) **Abrégé**

L'objet de l'invention est un dispositif modulaire de revêtement de sol pour box et plus particulièrement pour box à chevaux, caractérisé en ce qu'il comprend au moins un module (10) sous forme d'une dalle (12), destinée à être déposée sur le sol et comportant au moins une gouttière (16), en creux par rapport à la surface de ladite dalle.

## Description

La présente invention concerne un dispositif modulaire de revêtement de sol pour box et plus particulièrement pour box à chevaux.

L'exemple décrit ci-après vise spécifiquement l'aménagement des boxes à chevaux mais peut s'appliquer à des stalles destinées à recevoir d'autres animaux.

Les chevaux sont généralement en boxes lorsqu'ils ne peuvent rester à l'extérieur, ou quand il s'agit de chevaux de compétition par exemple.

Les boxes sont revêtus de béton au sol, ce qui est particulièrement inconfortable d'une part et sans aucune fonction d'autre part. Ce stationnement permanent sur le sol nécessite l'apport d'une litière généralement constituée de fibres naturelles par exemple paille, lin, copeaux, granules de bois, sciure.

Cette litière a pour vocation d'améliorer le confort d'une part mais surtout de recevoir les déjections de l'animal d'autre part.

C'est ainsi que le crottin est aisément retiré du box par l'opérateur chargé de l'entretien, de façon isolée, sans pour autant changer la totalité de la paille. Quant à l'urine, elle est absorbée en partie par ladite paille mais les volumes générés sont importants, de l'ordre de 15 à 20 litres par jour.

Les opérateurs en charge de l'entretien doivent donc retirer régulièrement la paille souillée.

On comprend qu'il s'agit d'une contrainte importante pour plusieurs raisons.

Il faut d'abord prévoir un achat, un stockage de paille en volume suffisant pour permettre ces changements réguliers.

Cette paille doit être de qualité et notamment exempte de poussière et de produits de traitement afin d'éviter les risques de problèmes respiratoires ou d'allergie.

Il faut procéder aux changements de la paille, ce qui implique le retrait de la paille souillée, le transfert de la paille fraîche et la répartition dans le box, ce qui requiert du personnel et coûte cher.

Enfin, la paille souillée doit être également évacuée et soit stockée, soit transportée vers un site de traitement, soit encore traitée sur place, si l'investissement dans un centre de traitement se justifie et a été effectué. Ces phases ont également un coût important.

En alternative, il a été proposé des revêtements sous forme de dalles absorbantes ou plaques de caoutchouc dites drainantes, c'est-à-dire poreuses. Le sol est alors réalisé avec une pente de façon à évacuer les urines.

Néanmoins, ces revêtements se transforment en éponge et provoquent une rétention d'urine, donc des émissions d'odeurs et ce sont des nids à bactéries. Il faut alors assurer un nettoyage régulier de ce revêtement, ce qui est très difficile et toujours incomplet.

Le but de la présente invention est de pallier ces problèmes de litière au moyen d'un dispositif qui n'absorbe pas l'urine, qui permet la collecte aisée du crottin, qui peut être nettoyé de façon optimale, qui ne génère pas de déchets autres que ceux des animaux eux-mêmes, qui assure la collecte de l'urine, qui améliore le confort des animaux tant en position couchée que debout, qui est modulable, qui peut être disposé dans une installation neuve ou existante, qui est amovible, qui ne nécessite pas d'entretien mécanique. Le coût doit être considéré comme un investissement puisque une fois acheté, il ne coûte plus rien.

Le dispositif est maintenant décrit en détail selon un mode de réalisation et ses variantes, cette description s'appuyant sur les dessins annexés, dessins sur lesquels les figures représentent :
- Figure 1 : une vue en perspective d'un module du dispositif selon la présente invention,
- Figure 2 : une première vue en coupe transversale du dispositif de la figure 1, selon la ligne 2-2, côté amont,
- Figure 3 : une seconde vue en coupe transversale du dispositif de la figure 1, selon la ligne 3-3, côté aval,
- Figure 4 : une vue en coupe longitudinale du dispositif de la figure 1, au droit d'une rainure,
- Figure 5 : une représentation schématique d'un premier aménagement de box, incluant le dispositif selon la présente invention,
- Figure 6 : une représentation schématique d'un second aménagement de box, incluant le dispositif selon la présente invention.
- Figure 7 : une variante de mode de réalisation à amortissement.

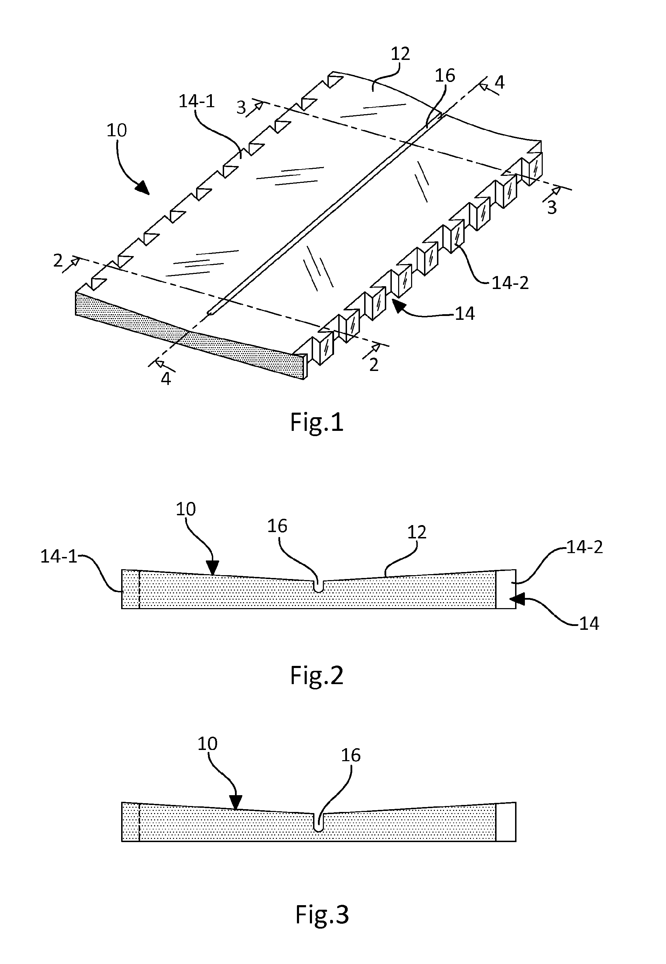

Sur la figure 1, on a représenté un module 10 du dispositif selon la présente invention qui est réalisé en un matériau du type élastomère, mousse à porosité fermée, chargé ou non. La densité doit permettre de recevoir le poids des animaux concernés et la pression des sabots, sans s'affaisser.

L'élastomère doit aussi résister aux appuis de fers lorsque les animaux en portent.

La nature du module en matériaux de synthèse peut être choisi parmi les élastomères EPDM (éthylène propylène diène monomère), totalement insensibles aux agressions des crottins et urines. C'est le matériau utilisé notamment pour les gommes de pneumatique.

L'idéal est bien entendu une réalisation bi-matière avec une âme en mousse et une enveloppe en EPDM de façon à allier légèreté et très forte résistance mécanique et à l'usure.

De plus la porosité fermée supprime tout nid à bactéries.

Le contact d'un tel matériau est beaucoup plus confortable pour l'animal, tant debout que couché, que ne pourrait l'être un sol bétonné. Le contact et le confort sont plutôt proches de celui d'un sol recouvert de paille, voire meilleur. Ce module 10, notamment représenté sur les figures 1 à 4, se présente sous forme d'une dalle 12 sensiblement rectangulaire, d'une épaisseur e constante, de l'ordre de 10 cm.

Les flancs longitudinaux du module comportent des moyens 14 de liaison, de préférence par emboîtement, par exemple avec des profils à queue d'aronde, mâle 14-1 et femelle 14-2.

Il est ainsi possible d'assembler plusieurs modules pour constituer une surface de dalles.

L'ajustement aux dimensions exactes du box concerné s'effectue par découpe sur la périphérie, si cela s'avère nécessaire, d'un ou plusieurs modules.

Comme cela est visible sur les coupes transversales, la forme de chaque module est légèrement en creux, de façon à créer une pente, dans le mode de réalisation représenté.

Chaque module 10 comporte au moins une gouttière 16 longitudinale. Cette gouttière est en creux par rapport à la surface du module, et dans le cas où il n'y a qu'un gouttière, cette gouttière unique est disposée au point bas du module.

La forme de la gouttière peut être simple, en U par exemple.

La lumière constituant l'ouverture de cette gouttière sur la face supérieure de la dalle est très limitée, étroite, de l'ordre du centimètre, afin que cela limite fortement toutes perturbations de l'appui des sabots des animaux sur ladite surface, ladite surface pouvant être considérée comme quasiment continue.

La gouttière 16 longitudinale se prolonge de l'amont vers l'aval.

L'aval est généralement considéré comme étant le fond du box, avec un espace réservé à la litière absorbante et au stockage des crottins, le temps d'un nettoyage complet.

En amont, la gouttière 16 est borgne c'est-à-dire qu'elle ne débouche pas. En aval, la gouttière 16 est débouchante. La gouttière est donc borgne à une extrémité.

Chaque gouttière longitudinale peut avoir un profil en Té renversé pour limiter l'ouverture en surface et présenter une forte section de transfert en dessous, au coeur de la matière.

Dans un mode préféré de réalisation, la gouttière 16 présente une pente de l'amont vers l'aval, ce qui améliore l'évacuation. La gouttière est alors borgne au droit de la plus faible profondeur.

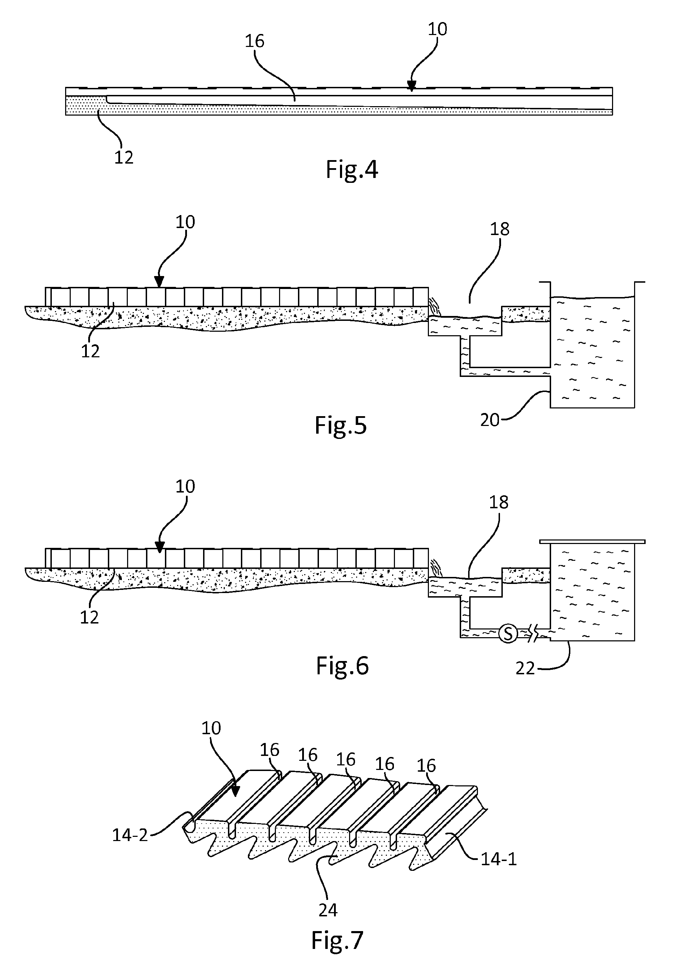

La sortie débouchante de la au moins une rainure peut être reliée à un collecteur 18 comme montré sur la figure 5.

Ce collecteur est dirigé vers un bac 20 contenant des matières absorbantes à très fort pouvoir d'absorption et désodorisantes, voir figure 4, ou vers un réservoir 22 de stockage ou de traitement avec une pompe, voir figure 5, en fonction de la taille de la structure.

L'utilisation du dispositif selon la présente invention permet de supprimer la paille, sans pour autant l'interdire. Certains inconditionnels de la paille ou équivalent peuvent en disperser une quantité sur le dispositif selon la présente invention, sans aucune restriction.

Il faut de toutes les façons moins de paille ou équivalent que dans le cas d'un sol bétonné. De plus, la paille n'absorbe quasiment rien puisque les urines sont rapidement collectées par les rainures et évacuées en fond de rainure en dehors du boxe ou dans un contenant, sans contact durable avec la paille, le confort et l'amorti sont conservés même si de la paille est ajoutée.

De plus l'étroitesse de chaque rainure évite le passage de la paille dans lesdites rainures qui ne sont donc pas bouchées par les brins de paille. Tout au plus, si des brins de paille entrent dans la rainure, ils feront filtre et ralentiront l'évacuation sans pour autant l'interdire.

La paille non souillée en continu nécessite des intervalles beaucoup plus longs entre deux changements.

Les crottins, eux, sont raclés à l'aide d'un balai adapté.

Avec ou sans paille ou équivalent, on note que le dispositif selon la présente invention comprenant au moins un module 10 conserve les avantagés énoncés et recherchés, facilite la récupération du crottin et évacue les urines au fur et à mesure de leur production, de façon continue.

Le confort du cheval même couché est grandement amélioré par rapport à un sol en béton recouvert d'une importante quantité de paille distribuée sur ledit sol. Le nettoyage du box peut être réalisé simplement au jet d'eau à la pression de distribution du réseau mais si besoin est, l'opérateur peut recourir à une machine à jet sous haute pression.

La porosité fermée facilite le nettoyage puisque seules les surfaces sont nettoyées, les volumes intérieurs étant inaccessibles.

De façon à améliorer encore le confort de l'animal dans le box, il est possible de ménager des moyens 24 amortisseurs, sous forme de lamelles ou de plots en saillie sur la face de chaque module en contact avec le sol, de façon à obtenir un effet amortisseur mais à très faible débattement, voir figure 7. Il convient que l'animal soit bien campé sur ses membres lorsqu'il est debout et que le dispositif ne fasse pas travailler exagérément ses muscles, tendons et articulations.

La liaison entre les modules peut aussi être obtenue par un emboîtement longitudinal, tel que représenté sur cette figure 7, le profil au droit de la liaison constituant une rainure.

On note aussi, sur la représentation de la figure 7, que les gouttières 16 sont nombreuses et faiblement espacées, les lamelles étant inclinées. Dans ce cas, l'espace entre les gouttières 14 est bombé pour évacuer vers l'une ou l'autre des gouttières.

Dans ce cas, le nettoyage sous le dispositif est possible même sans lever le dispositif, par simple utilisation d'un nettoyeur à haute pression dont la lance est positionnée en aval, sur la tranche.

Il est aussi rappelé que comme le dispositif est amovible, il est possible de le retirer régulièrement pour un nettoyage approfondi du box, en sortant l'animal préalablement.

Les modules constituant le dispositif peuvent être obtenus notamment par moulage.

## Revendications

1. Dispositif modulaire de revêtement de sol pour box et plus particulièrement pour box à chevaux, **caractérisé en ce qu'**il comprend au moins un module (10) sous forme d'une dalle (12), destinée à être déposée sur le sol et comportant au moins une gouttière (16), en creux par rapport à la surface de ladite dalle.

2. Dispositif modulaire de revêtement de sol pour box selon revendication 1, **caractérisé en ce que** le module est de forme rectangulaire et **en ce que** la au moins une gouttière (16) est orientée longitudinalement.

3. Dispositif modulaire de revêtement de sol pour box selon la revendications 1 ou 2, **caractérisé en ce que** la au moins une gouttière (16) présente une pente.

4. Dispositif modulaire de revêtement de sol pour box selon l'une quelconque des revendications précédentes, **caractérisé en ce que** chaque gouttière (16) est borgne à l'une des extrémités.

5. Dispositif modulaire de revêtement de sol pour box selon l'une quelconque des revendications précédentes, **caractérisé en ce que** chaque gouttière (16) présente une section avec une lumière étroite.

6. Dispositif modulaire de revêtement de sol pour box selon l'une quelconque des revendications précédentes, **caractérisé en ce que** chaque module (10) comporte des moyens de liaison (14) avec un autre module (10).

7. Dispositif modulaire de revêtement de sol pour box selon l'une quelconque des revendications précédentes, **caractérisé en ce que** chaque module (10) comporte des moyens (24) amortisseurs.

8. Dispositif modulaire de revêtement de sol pour box selon la revendication 7, **caractérisé en ce que** les moyens (24) amortisseurs sont constitués de lamelles ou de plots, ménagés sur la face inférieure de chaque module (10).

9. Dispositif modulaire de revêtement de sol pour box selon l'une quelconque des revendications précédentes, **caractérisé en ce que** chaque module (10) est relié à un collecteur (18) dirigé vers un bac (20) contenant des matières absorbantes ou vers un réservoir (22) de stockage ou de traitement.

10. Dispositif modulaire de revêtement de sol pour box selon l'une quelconque des revendications précédentes, **caractérisé en ce que** chaque module (10) est réalisé en matériau de synthèse du type élastomère.
